# FASCICULE DE BREVET EUROPEEN

(11) **EP 1 514 739 B1**
(45) Date de publication et mention de la délivrance du brevet: **12.11.2008**
(21) Numéro de dépôt: 03020397.0
(22) Date de dépôt: 10.09.2003
(51) Int. Cl.: B60R 21/02

(54) **Dispositif de sécurite pour véhicule**
Sicherheitseinrichtung für ein Fahrzeug
Safety device for a vehicle

(43) Date de publication de la demande: 16.03.2005
(73) Titulaire: MP Vanquish S.A., 1700 Fribourg (CH)
(72) Inventeur: Penaranda, Jose Antonio, ES-28760 Tres Cantos (ES)
(74) Mandataire: Bugnion Genève

(56) Documents cités:
- EP-A- 1 356 994
- DE-U- 29 810 552
- FR-A- 2 792 894
- US-A- 5 437 474
- US-A- 5 735 564

## Description

L'invention concerne un dispositif de sécurité pour l'arrêt de marchandises mises en mouvement dans un véhicule par rapport à ce dernier lors d'une décélération.

Depuis plusieurs années, se développent chez les constructeurs automobiles deux tendances contradictoires.

D'une part, les constructeurs ont mis d'importants moyens en oeuvre pour améliorer avec succès la sécurité des passagers à bord des véhicules et même plus récemment la sécurité des piétons. Aujourd'hui, la quasi-totalité des véhicules de tourisme et des véhicules utilitaires commercialisés est pourvue de coussins gonflables de protection (connus sous la marque déposée airbag), de systèmes de freinage puissants à dispositifs anti-blocage et de dispositifs de pré-tension des ceintures de sécurité. L'utilisation de tous ces moyens a notablement amélioré la sécurité du conducteur et des passagers. Ces améliorations peuvent notamment être observées lors de crash-tests de sorte que la sécurité des véhicules est aujourd'hui l'un des principaux arguments de vente des constructeurs.

D'autre part, les constructeurs proposent et vendent de plus en plus de véhicules présentant de grands volumes tels que les monospaces. Le volume important de ces véhicules et la modularité permettent au gré du conducteur de transporter des personnes ou des marchandises. Dans ces véhicules de tourisme la charge utile peut atteindre 600 kg et dans des véhicules utilitaires cette charge peut être dépassée.

Ces deux tendances sont contradictoires en ce que dans les véhicules offrant un grand volume pour le stockage de marchandises ne présentent aucun moyen suffisamment résistant, conçu pour sécuriser le conducteur et les passagers par rapport au danger que représente des marchandises lors de fortes décélérations.

En effet, grâce aux puissants freins dont sont munis les véhicules ou lors d'un choc, les marchandises présentes dans le véhicule sont mises en mouvement par rapport à celui-ci, à moins qu'elles ne soient solidement attachées à des points d'ancrage résistants. Ces marchandises sont transformées en de véritables projectiles se dirigeant vers l'avant du véhicule lors d'un choc frontal.

On connaît actuellement dans les véhicules utilitaires des dispositifs de sécurité séparant le poste de conduite du véhicule et la zone de stockage de marchandises. Ces dispositifs consistent en une simple grille métallique fixée de manière rigide à la caisse du véhicule au niveau du plancher et du toit et/ou au niveau des parois latérales. Ce type de dispositif est tout à fait adapter pour arrêter des marchandises de quelques kilos, mais est absolument insuffisant pour arrêter des marchandises dont la masse est de l'ordre de la charge utile du véhicule.

On connaît depuis le 29/10/2003 de la demande EP 1 356 994 un dispositif de sécurité comprenant une grille fixée à la caisse d'un véhicule par l'intermédiaire de crochets comprenant des ronds métalliques ayant des formes de vilebrequin. Ces formes permettent aux crochets de se déformer pour absorber l'énergie cinétique de marchandises en cas de décélération violente du véhicule.

On connaît également du document FR 2 792 894 un dispositif de retenue de charges disposées dans le coffre d'un véhicule. Ce dispositif est principalement constitué par une traverse.

De même, les véhicules de tourisme présentant un grand volume modulable sont munis de points d'ancrage permettant d'arrimer des marchandises au plancher du véhicule. Là encore, ces moyens permettent d'assurer une bonne sécurité dans le véhicule avec des marchandises de quelques kilos, mais sont tout à fait insuffisants pour sécuriser un véhicule transportant des marchandises dont la masse est de l'ordre de la charge utile du véhicule. Un tel dispositif de sécurité ne permet que de réduire l'énergie cinétique de la marchandise. Cette réduction est sensiblement égale à l'énergie d'arrachement des fixations du dispositif.

Le but de l'invention est de fournir un dispositif de sécurité apportant une solution aux problèmes cités et apportant une amélioration aux dispositifs connus de l'état de la technique. En particulier, l'invention propose un dispositif de sécurité permettant de sécuriser un véhicule de grand volume transportant des marchandises dont la masse est de l'ordre de la charge utile du véhicule.

Pour atteindre ce but, le dispositif de sécurité selon l'invention est caractérisé par la partie caractérisante de la revendication 1.

Les lois de la physique, en particulier les principes de la dynamique, nous apprennent que plus on prend de temps et d'espace pour décéléré un objet en mouvement, plus l'effort de décélération appliqué à l'objet peut être réduit. Cet effort devant être repris dans le cas du dispositif de sécurité par ses points d'ancrage à la caisse du véhicule, il apparaît très intéressant de le diminuer autant que possible. Le dispositif de sécurité selon l'invention a par conséquent un fonctionnement dynamique qui permet la décélération progressive des marchandises, contrairement, aux dispositifs connus qui présentent une résistance statique aux efforts et qui aussi résistants soient-ils sont rapidement arrachés au niveau de leurs points de fixation à la caisse du véhicule lors de décélérations violentes.

D'autres lois physiques, nous apprennent que si l'on veut diminuer l'énergie cinétique d'un objet en mouvement, il faut transformer cette énergie dans la mesure ou l'on ne peut pas la faire disparaître. L'énergie cinétique des marchandises est donc, dans le dispositif de sécurité selon l'invention, absorbée par des éléments déformables permettant de dissiper l'énergie ou de la stocker par exemple sous forme d'une énergie potentielle.

Différents modes de réalisation du dispositif de sécurité sont définies par les revendications dépendantes 2 à 12.

La revendication 13 porte sur un véhicule équipé d'un dispositif de sécurité.

Les dessins annexés représentent, à titre d'exemples, plusieurs modes de réalisation du dispositif selon l'invention.

La figure 1 est une vue en perspective arrière d'un dispositif de sécurité selon un premier mode de réalisation.

La figure 2 est une vue de côté d'un dispositif de sécurité selon un deuxième mode de réalisation.

La figure 3 est une vue de côté d'un dispositif de sécurité selon un troisième mode de réalisation.

La figure 4 est une vue en perspective avant d'un dispositif de sécurité selon un quatrième mode de réalisation.

La figure 5 est une vue de côté d'un dispositif de sécurité selon un cinquième mode de réalisation.

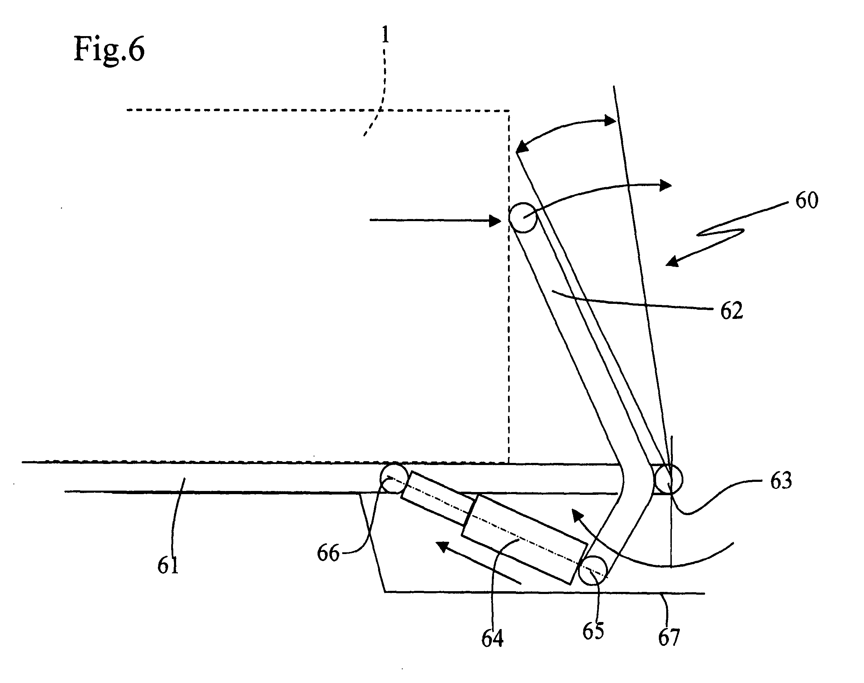

La figure 6 est une vue de côté d'un dispositif de sécurité selon un sixième mode de réalisation.

La figure 7 est une vue de côté d'un dispositif de sécurité selon un septième mode de réalisation.

La figure 8 est une vue de côté d'un dispositif de sécurité selon un huitième mode de réalisation.

La figure 9 est une vue de côté d'un dispositif de sécurité selon un neuvième mode de réalisation.

La figure 10 est un schéma d'un dispositif de sécurité lié à la caisse d'un véhicule par l'intermédiaire d'un plancher mobile.

La figure 11 est une vue de côté du deuxième mode de réalisation du dispositif de sécurité installé dans un véhicule à l'arrière des sièges avant.

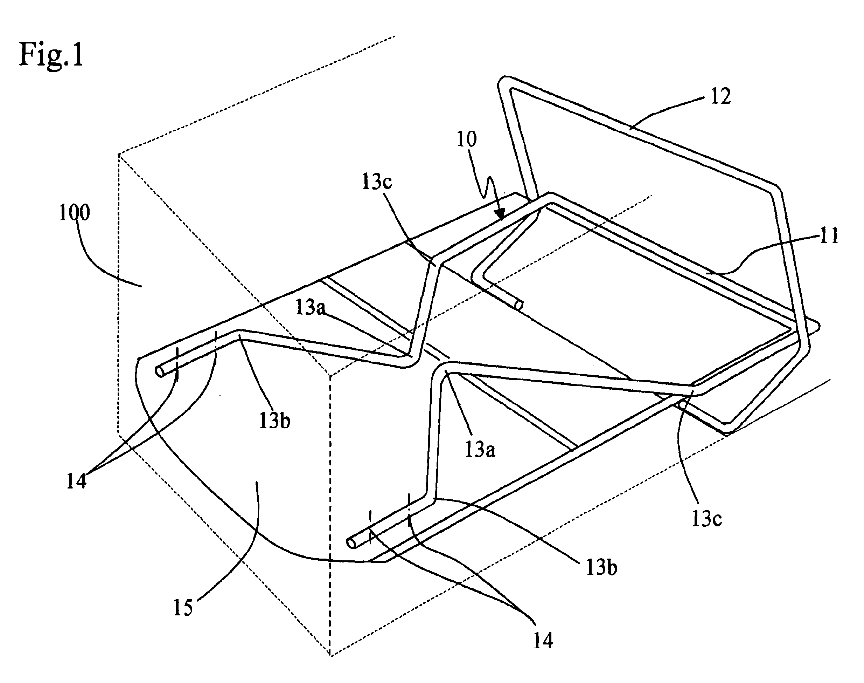

Le dispositif de sécurité 10 représenté à la figure 1 est principalement constitué d'un cadre horizontal 11 auquel est lié rigidement un cadre sensiblement vertical 12 dit cadre de retenue. Ces cadres sont par exemple constitués de tubes cylindriques en acier. Ce dispositif de sécurité est destiné à équiper un véhicule 100 de tourisme dont les sièges arrières ont été déposés ou à équiper un véhicule utilitaire.

Le cadre de retenue 12 situé en arrière du siège du conducteur est destiné à retenir les marchandises et à éviter qu'elles viennent violemment en contact avec le siège conducteur ou le siège passager avant lors de transferts de charge provoqués par une décélération due à un freinage ou à un choc frontal du véhicule. Il comprend notamment une barre transversale dont la longueur est sensiblement égale à la largeur de l'intérieur de la caisse du véhicule.

Le cadre horizontal 11 assure la reprise, par la caisse du véhicule, des efforts exercés sur le cadre de retenue 12. Le cadre horizontal 11 est fixé au plancher 15 d'un véhicule à l'arrière de celui-ci par l'intermédiaire de vis 14. Il peut par exemple être fixé au plancher du véhicule au niveau des points d'ancrage des ceintures de sécurité arrière du véhicule ou au niveau des points d'ancrage des sièges arrières. Ce cadre 11 présente sur ses côtés longitudinaux des zones cintrées 13a, 13b, 13c. Ces zones constituant des éléments déformables principaux permettent de conférer au cadre des propriétés élastiques lorsque celui-ci est soumis à des contraintes longitudinales comme c'est le cas lorsqu'une marchandise vient en contact avec le cadre de retenue 12. Les côtés longitudinaux du cadre horizontal 11 sont plaqués contre le plancher du véhicule ou contre les parois latérales du véhicule pour des raisons d'encombrement et d'esthétisme.

Cette élasticité du cadre horizontal 11 permet d'amortir les impacts des marchandises sur le cadre de retenue. L'effort de contact qu'exerce la marchandise en contact avec le cadre de retenue entraîne un déplacement de la partie avant de ce cadre vers l'avant du véhicule par déformation du cadre horizontal principalement en flexion au niveau de ces zones cintrées 13a, 13b et 13c. Ce déplacement se fait sous l'action d'efforts de réaction dus à la déformation des zones cintrées. Ainsi, les efforts appliqués par le cadre horizontal sur la caisse du véhicule sont réduits par rapport aux efforts qui seraient appliqués si le dispositif était quasiment indéformable. On note que plus le déplacement du cadre de retenue permis par le cadre horizontal est important, plus les efforts repris par la caisse au niveau de la fixation du cadre horizontal sur le plancher peuvent être réduits.

Lors de ce déplacement tout ou partie de l'énergie cinétique de la marchandise est transformée en énergie potentielle élastique de déformation des zones cintrées du cadre horizontal. Au-delà d'une certaine limite définie, la déformation des zones cintrées n'est plus élastique, mais permanente. L'énergie cinétique de la marchandise n'est alors plus transformée en énergie potentielle de déformation élastique mais dissipée pour déformer de manière permanente le cadre horizontal.

La course du cadre de retenue est programmée par le dimensionnement des zones cintrées et des matériaux le constituant. Le fonctionnement du dispositif est séquentiel. Lors d'une première séquence, la déformation du cadre est élastique et lors d'une deuxième séquence la déformation est permanente.

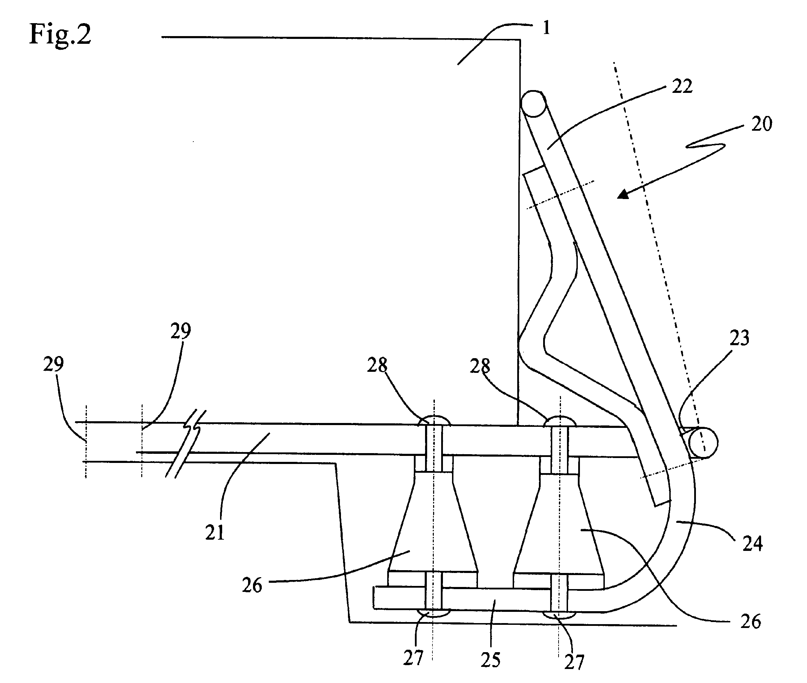

Un deuxième mode de réalisation du dispositif de sécurité 20 représenté à la figure 2 diffère du dispositif précédent en ce qu'il comprend des éléments supplémentaires de conversion de l'énergie cinétique des marchandises. Il comprend principalement un cadre horizontal 21 lié au plancher du véhicule par l'intermédiaire de vis 29. Sur ce cadre, est articulé, par une liaison pivot, 23 un cadre de retenue 22. Ce cadre comprend, à ses deux extrémités, dans sa partie inférieure deux bras recourbés 25 liés au cadre 21 par l'intermédiaire de plots 26 en matériau élastomère tel que du VIBTENE (marque déposée). Ces plots rappellent le cadre de retenue 22 dans une position de repos représentée à la figure 2.

Lorsqu'une marchandise 1 arrive en contact avec le cadre de retenue, celui-ci pivote autour de la liaison pivot 23 et compresse les plots 26. La déformation des plots permet d'amortir les efforts exercés sur le cadre de retenue et de diminuer l'énergie cinétique de la marchandise, comme le dispositif précédemment décrit.

Des zones cintrées ne sont pas forcément nécessaires sur le cadre 21. En effet, les plots 26 et éventuellement les zones cintrées 24 raccordant les bras 25 au cadre 22 assurent les mêmes fonctions.

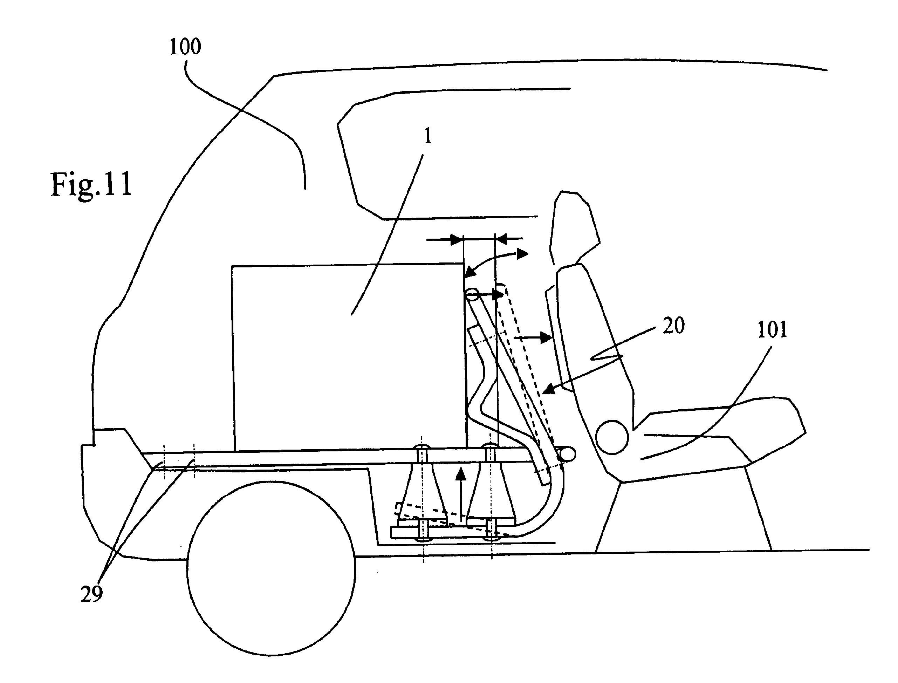

Ce deuxième mode de réalisation du dispositif de sécurité est représenté à la figure 11 dans un véhicule 100 à l'arrière de ses sièges avant 101.

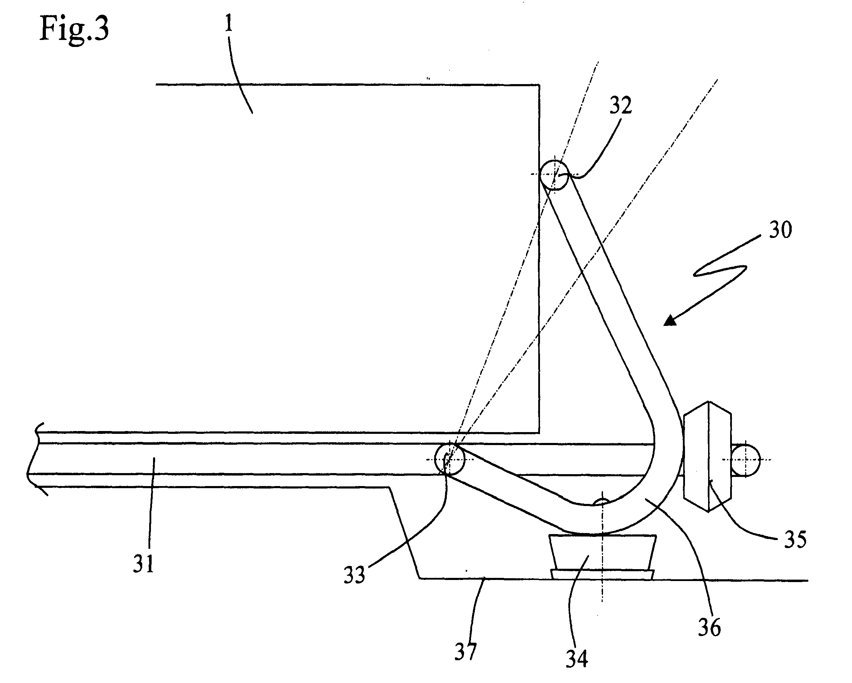

Un troisième mode de réalisation du dispositif de sécurité 30 représenté à la figure 3 diffère du dispositif précédent en ce qu'il comprend des éléments de conversion de l'énergie cinétique des marchandises agencés de manière différente. Il comprend principalement un cadre horizontal 31 lié au plancher du véhicule par l'intermédiaire de vis et un cadre de retenue 32 articulé sur le cadre horizontal 31 par une liaison pivot 33. Le cadre de retenue 32 comprend une partie inférieure recourbée raccordée à la partie supérieure du cadre par une zone cintrée. Le cadre de retenue est lié au plancher 37 du véhicule par l'intermédiaire de vis traversant deux entretoises 34 en matériau élastomère. Le cadre de retenue est également en contact avec deux plots en matériau élastomère liés au cadre 31.

Lorsqu'une marchandise 1 arrive en contact avec le cadre de retenue, celui-ci pivote autour de la liaison pivot 33 et compresse verticalement les entretoises 34 et horizontalement les plots 35. La déformation de ces éléments permet d'amortir les efforts exercés sur le cadre de retenue et de diminuer l'énergie cinétique de la marchandise.

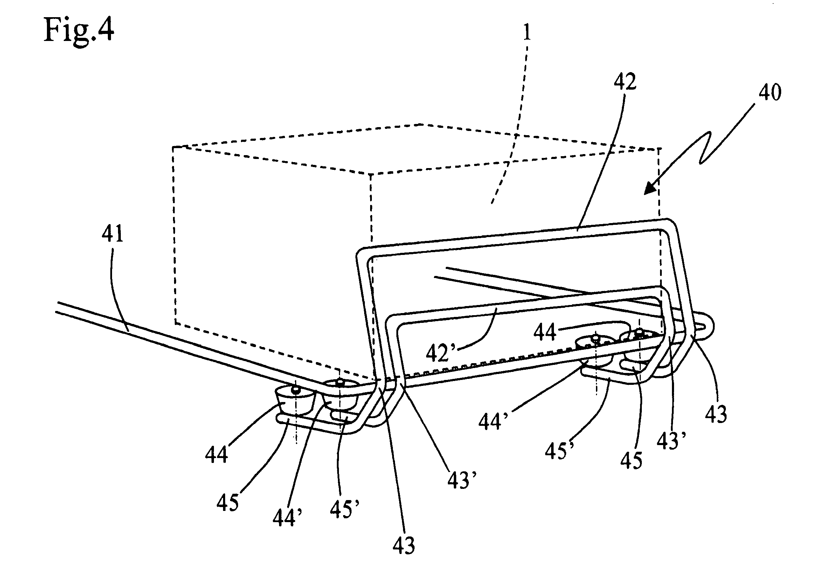

Un quatrième mode de réalisation du dispositif de sécurité 40 représenté à la figure 4 diffère du deuxième mode de réalisation en ce qu'il comprend deux cadres de retenue 42, 42' articulés sur un cadre horizontal 41 par des liaisons pivot 43, 43'. Chaque cadre de retenue comprend respectivement deux bras inférieurs 45, 45' liés au cadre 41 par l'intermédiaire de plots en matériau élastomère 44, 44'.

Les barres transversales supérieures des deux cadres de retenue peuvent être contenues dans un même plan vertical et faire travailler ainsi simultanément les plots 44 et 44' ou être contenues dans deux plans verticaux décalés et faire travailler successivement les plots 44 et 44' (dans l'hypothèse d'une marchandise de forme parallélépipédique suffisamment haute agissant sur les cadres de retenue).

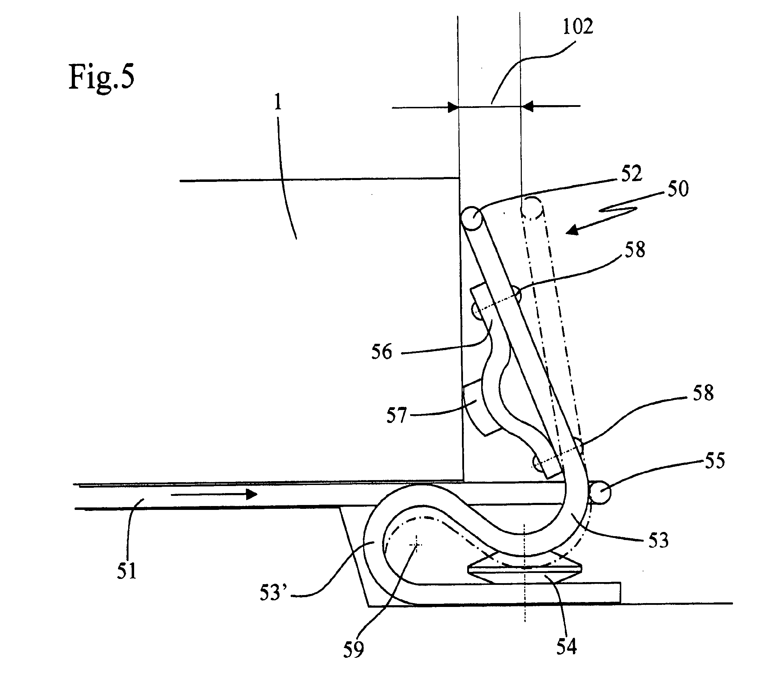

Dans un cinquième mode de réalisation du dispositif de sécurité 50, représenté à la figure 5, un cadre de retenue 52 est en appui contre la partie avant d'un cadre horizontal 51. La partie inférieure du cadre de retenue présente des zones cintrées 53 et 53' sensiblement en forme de U.

Lorsqu'une marchandise 1 arrive en contact avec le cadre de retenue, celui-ci se déforme et sa partie supérieure se déplace sensiblement comme si elle était articulée autour d'un axe virtuel 59. En se déformant, le cadre de retenue compresse deux plots 54 en matériau élastomère. La partie supérieure du cadre comprend des éléments tubulaires 56 liés à la partie supérieure du cadre 52 par des vis 58 et portant des éléments déformables 57 tels que des corps creux en matériau élastomère rempli d'une mousse à structure cellulaire, constituant des éléments déformables auxiliaires.

Le cadre de retenue 52 est représenté à la figure 5 en pointillé dans sa position de fin de course élastique. Cette position peut être atteinte lors d'une forte décélération du véhicule lorsqu'une marchandise vient exercer un effort sur le cadre de retenue. La flèche 102 représente la course élastique du dispositif.

Un sixième mode de réalisation du dispositif de sécurité 60 diffère du deuxième mode de réalisation en ce que les plots en matériau élastomère sont remplacés par des dispositifs 64 comprenant un ressort hélicoïdal et un amortisseur hydraulique. Un cadre de retenue 62 est articulé sur un cadre horizontal 61 autour d'une liaison pivot 63. Le cadre de retenue comprend des bras inférieurs liés au cadre horizontal 61 par l'intermédiaire de dispositifs 64 faisant partie des éléments déformables principaux.

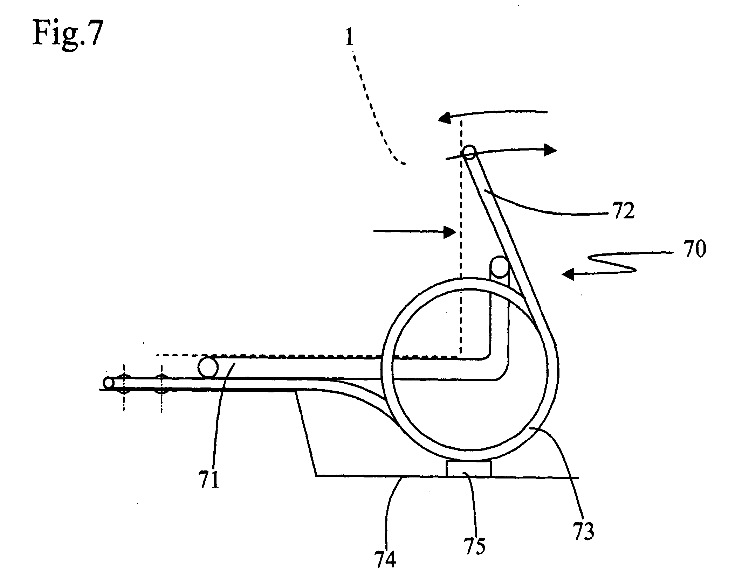

Un septième mode de réalisation du dispositif de sécurité 70 représenté à la figure 7, comprend principalement un cadre horizontal 71 lié à un cadre de retenue 72 par un ressort de torsion 73. Ce ressort de torsion est réalisé avec le même tube métallique que celui utilisé pour la réalisation des cadres 71 et 72. Le nombre de spires du ressort, la section du tube, le diamètre d'enroulement et la nature du matériau utilisé déterminent la raideur de ce ressort qui repose sur le plancher 74 du véhicule par l'intermédiaire d'un plot 75.

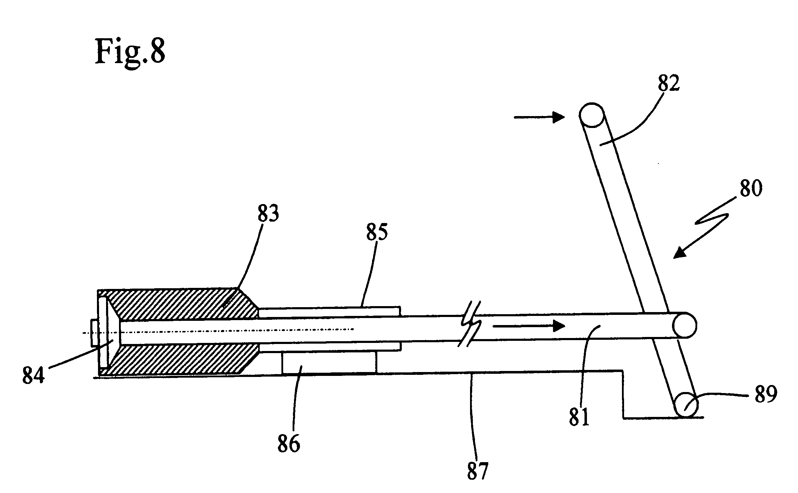

Un huitième mode de réalisation du dispositif de sécurité 80 représenté à la figure 8, comprend principalement un cadre horizontal 81 en liaison glissière par rapport au plancher 87 du véhicule. Un cadre de retenue 82 est articulé, dans sa partie inférieure, relativement au plancher du véhicule, par une liaison pivot 89. Ce cadre de retenue est maintenu en contact contre l'avant du cadre horizontal. Deux tubes cylindriques 85 de guidage sont liés au plancher du véhicule par l'intermédiaire de supports 86. Les tubes du cadre horizontal 81 sont montés coulissant dans les deux tubes de guidage 85 et, entre l'arrière des tubes de guidage et un épaulement 84 réalisé à l'arrière de chacun des tubes du cadre horizontal, est intercalé un élément principal de déformation 83 tel qu'un tube réalisé en matériau élastomère.

Lorsqu'une marchandise arrive en contact avec le cadre de retenue 82, celui-ci se déplace en rotation autour de la liaison pivot 89 et exerce un effort de traction sur le cadre horizontal 81. Cet effort entraîne la déformation des tubes en matériau élastomère 83 qui permettent de réduire l'énergie cinétique de la marchandise.

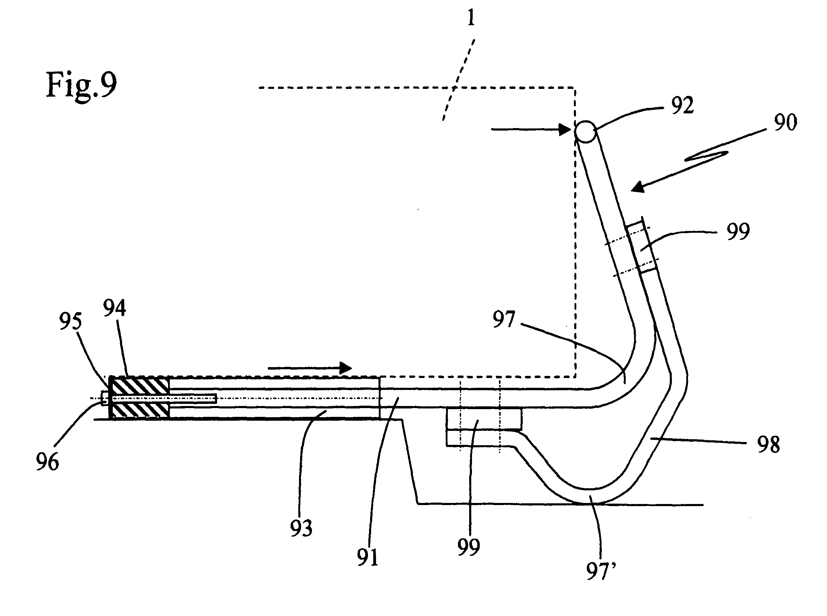

Un neuvième mode de réalisation du dispositif de sécurité 90, représenté à la figure 9, diffère du mode de réalisation précédent en ce que le cadre de retenue 92 et le cadre horizontal sont venus de mêmes tubes. Les tubes longitudinaux du cadre horizontal 91 sont cintrés au niveau de zones 97 dans leur partie avant pour constituer des tubes sensiblement verticaux du cadre de retenue 92. Sur chaque tube longitudinal est lié, de part et d'autre de la zone cintrée 97, par des fixations 99, un élément tubulaire 98 comprenant une zone cintrée 97' venant en contact avec le plancher du véhicule.

Lorsqu'une marchandise 1 arrive en contact avec le cadre de retenue 92, celui-ci peut se déplacer d'une part avec le cadre horizontal 91 par déformation de premiers éléments principaux déformables en matériau élastomère 94 et d'autre part, par rapport au cadre horizontal par déformation de seconds éléments principaux déformables constitués par les zones cintrées 97 et 97'. La déformation des différents éléments principaux déformables détermine la course du cadre de retenue.

Lors d'efforts exercés sur le cadre, les différents éléments principaux déformables peuvent se déformer simultanément ou successivement. Dans ce dernier cas, on obtient un fonctionnement séquentiel du dispositif de sécurité.

Les différents dispositifs de sécurité décrits permettent de sécuriser des zones du véhicule, en particulier le poste de conduite, par rapport au danger que représente des marchandises stockées dans une autre zone lors de décélérations violentes. Compte tenu du fonctionnement de ce dispositif de sécurité, il est important de prévoir en arrière de la zone à sécuriser un espace autorisant la course de déplacement prévue du cadre de retenue lors du fonctionnement du dispositif de sécurité.

Les éléments de retenue décrits précédemment consistent en des cadres de retenue comprenant une ou plusieurs barres transversales. Cependant, les éléments de retenue peuvent être plus complexes et peuvent notamment comprendre une grille métallique solidaire du cadre de retenue permettant d'éviter l'intrusion de marchandises de petites dimensions mais de masse relativement importante dans la zone sécurisée.

Les éléments déformables principaux décrits consistent en des tubes ou plus généralement des profilés métalliques présentant des formes et des dimensionnements déterminés, en des éléments en matériau élastomère, en des ressorts de compression ou de torsion et en des éléments amortisseurs. Ces éléments principaux déformables peuvent cependant être réalisés par tout dispositif mécanique et/ou pneumatique et/ou hydraulique et/ou pyrotechnique permettant de localiser et contrôler la déformation du dispositif de sécurité en des endroits précis. Ainsi, la déformation du dispositif est maîtrisée et la course de l'élément de retenue est déterminée ou programmée par la déformation des éléments déformables. Les dispositifs pyrotechniques peuvent en particulier agir sur les marchandises dans le sens opposé à leur déplacement.

Selon les modes de réalisation, la course programmée de l'élément de retenue peut, par exemple, atteindre 10 à 20 cm.

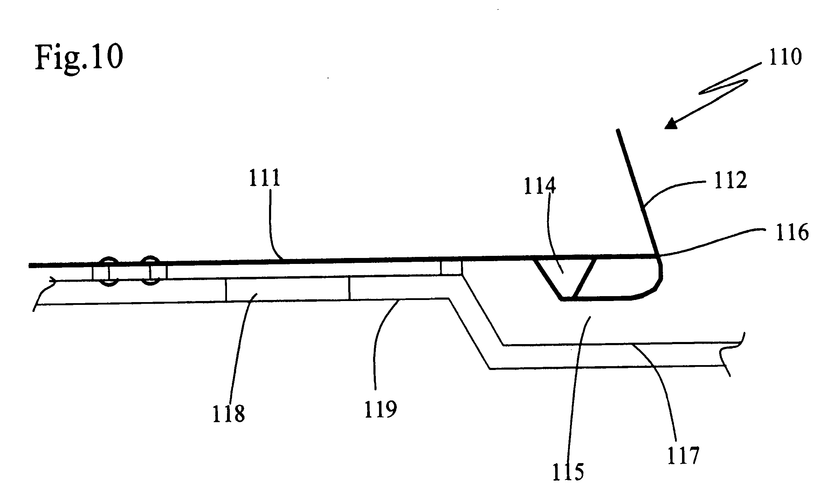

Les dispositifs décrits précédemment peuvent être comme représenté à la figure 10 montés sur un plancher 117 mobile longitudinalement par rapport à la caisse 119 du véhicule à laquelle il est lié par un élément déformable 118. Le dispositif de sécurité représenté à cette figure comprend principalement un cadre horizontal 111 sur lequel est articulé un cadre de retenue 112 par une liaison pivot 116, le déplacement du cadre de retenue 112 déformant des éléments 114 en matériau élastomère.

## Revendications

1. Dispositif de sécurité (10 ; 20 ; 30 ; 40 ; 50 ; 60 ; 70 ; 80 ; 90) pour l'arrêt de marchandises mises en mouvement dans un véhicule (100) par rapport à ce dernier lors d'une décélération, à déformation et course programmées, et comprenant au moins un élément mobile de retenue (12 ; 22 ; 32 ; 42 ; 52 ; 62 ; 72 ; 82 ; 92) des marchandises dont le déplacement entraîne la déformation d'au moins un élément déformable principal (13a, 13b, 13c ; 24, 26 ; 34, 35, 36 ; 44 ; 53, 53', 54 ; 64 ; 73 ; 83 ; 94, 97, 97') permettant d'amortir l'impact des marchandises sur le ou les éléments mobiles de retenue et d'absorber l'énergie cinétique des marchandises (1) en contact avec le ou les éléments de retenue, **caractérisé en ce qu'**il comprend un premier cadre sensiblement vertical (12 ; 22; 32; 42; 52; 62; 72; 82; 92) lié à un deuxième cadre (11; 21; 31; 41; 51; 61; 71; 81; 91) ancré à la caisse du véhicule en arrière du premier cadre.

2. Dispositif de sécurité selon la revendication 1, **caractérisé en ce qu'**il est ancré à un plancher du véhicule.

3. Dispositif de sécurité selon l'une des revendications précédentes, **caractérisé en ce que** le premier cadre (12; 92) est lié rigidement au deuxième cadre (11; 91).

4. Dispositif de sécurité selon l'une des revendications précédentes, **caractérisé en ce que** le premier cadre et le deuxième cadre sont constitués de tubes.

5. Dispositif de sécurité selon la revendication précédente, **caractérisé en ce que** le premier cadre (92) et le deuxième cadre (91) sont venus de mêmes tubes.

6. Dispositif de sécurité selon l'une des revendications précédentes, **caractérisé en ce qu'**il comprend plusieurs éléments déformables principaux qui sont sollicités simultanément ou successivement lors du déplacement de l'élément de retenue.

7. Dispositif de sécurité selon l'une des revendications précédentes, **caractérisé en ce que** les efforts exercés par le dispositif sur le véhicule au niveau de ses points d'ancrage (14 ; 29 ; 86 ; 93) ne dépassent pas la valeur d'arrachement pendant toute la course programmée de l'élément de retenue.

8. Dispositif de sécurité selon l'une des revendications précédentes, **caractérisé en ce que** la déformation du ou des éléments déformables principaux détermine la course programmée de l'élément de retenue.

9. Dispositif de sécurité selon l'une des revendications précédentes, **caractérisé en ce que** le ou les éléments déformables principaux sont réalisés en profilés métalliques et comprennent plusieurs zones cintrées sur un ou plusieurs profilés.

10. Dispositif de sécurité selon l'une des revendications précédentes, **caractérisé en ce que** le ou les éléments mobiles de retenue (22 ; 32 ; 42 ; 52 ; 62 ; 72 ; 82) des marchandises sont mobiles par un déplacement de pivotement autour d'un axe transversal (23 ; 33 ; 43 ; 59 ; 63 ) au véhicule situé sensiblement au niveau du plancher.

11. Dispositif de sécurité selon l'une des revendications précédentes, **caractérisé en ce que** le ou les éléments mobiles de retenue (52) des marchandises présentent au niveau de leur surface de contact avec les marchandises, des éléments déformables auxiliaires (57) d'amortissement et d'absorption d'énergie.

12. Dispositif de sécurité selon la revendication 11, **caractérisé en ce que** les éléments déformables auxiliaires (57) d'amortissement et d'absorption d'énergie comprennent un corps creux en matériau élastomère rempli d'une mousse à structure cellulaire.

13. Dispositif de sécurité selon l'une des revendications précédentes, **caractérisé en ce que** les éléments de retenue comprennent au moins un profilé rigide par rapport aux éléments déformables.

14. Dispositif de sécurité selon l'une des revendications précédentes, **caractérisé en ce que** les éléments déformables principaux comprennent des éléments élastomères (26 ; 34, 35 ; 44, 44' ; 54 ; 83 ; 94) et/ou des profilés cintrés (13a, 13b, 13c; 24 ; 36 ; 53, 53' ; 97, 97') et/ou des éléments ressorts (64 ; 73) et/ou des éléments pneumatiques et/ou des éléments hydrauliques (64) et/ou des dispositifs pyrotechniques.

15. Dispositif de sécurité selon l'une des revendications précédentes, **caractérisé en ce que** le deuxième cadre (11; 21; 31; 41; 51; 61; 71; 81; 91) est fixé au plancher du véhicule.

16. Dispositif de sécurité selon la revendication 15, **caractérisé en ce que** le deuxième cadre (11; 21; 31; 41; 51; 61; 71; 81; 91) est fixé au plancher du véhicule au niveau des points d'ancrage des ceintures de sécurité arrière du véhicule.

17. Dispositif de sécurité selon la revendication 15, **caractérisé en ce que** le deuxième cadre (11; 21; 31; 41; 51; 61; 71; 81; 91) est fixé au plancher du véhicule au niveau des points d'ancrage des sièges arrière du véhicule.

18. Dispositif de sécurité selon l'une des revendications précédentes, **caractérisé en ce que** la course programmée de l'élément de retenue atteint 10 à 20 cm.

19. Dispositif de sécurité selon l'une des revendications précédentes, **caractérisé en ce que** les côtés longitudinaux du deuxième cadre sont plaqués contre le plancher du véhicule ou contre les parois latérales du véhicule.

20. Dispositif de sécurité selon l'une des revendications précédentes, **caractérisé en ce qu'**il comprend des moyens d'ancrage utilisant des fixations habituellement destinées à fixer les ceintures de sécurité arrière du véhicule et/ou les sièges arrière du véhicule.

21. Dispositif de sécurité (110) selon l'une des revendications 1 à 14, **caractérisé en ce qu'**il est ancré sur un plancher (117) mobile longitudinalement par rapport à la caisse (119) du véhicule, le plancher du véhicule étant à déformation et course programmées et comprenant un moyen (118) déformable de liaison à la caisse du véhicule, permettant d'amortir ses mouvements et d'absorber son énergie cinétique.

22. Dispositif de sécurité selon l'une des revendications 1 à 21, **caractérisé en ce que** le deuxième cadre est horizontal.

23. Véhicule (100), **caractérisé en ce qu'**il comprend un dispositif de sécurité selon l'une des revendications précédentes.

## Claims

1. Security device (10; 20; 30; 40; 50; 60; 70; 80; 90) for retaining loaded goods that are set in motion in a vehicle (100) with respect to the latter caused by a deceleration, said security device being based on programmed deformation and displacement and comprising at least one mobile load retaining element (12; 22; 32; 42; 52; 62; 72; 82; 92) whose displacement leads to the deformation of at least one main deformable element (13a, 13b, 13c; 24, 26; 34, 35, 36; 44; 53, 53', 54; 64; 73; 83; 94, 97, 97'), thus allowing to dampen the impact of the loaded goods onto the mobile load retaining element or elements and to absorb the kinetic energy of the loaded goods (1) which are in contact with the retaining element or elements, **characterised in that** the device comprises a first, essentially vertical frame (12; 22; 32; 42; 52; 62; 72; 82; 92) connected to a second frame (11; 21; 31; 41; 51; 61; 71; 81; 91) anchored to the body of the vehicle behind the first frame.

2. Security device according to claim 1, **characterised in that** it is anchored to a floor of the vehicle.

3. Security device according to any one of the preceding claims, **characterised in that** the first frame (12; 92) is rigidly connected to the second frame (11; 91).

4. Security device according to any one of the preceding claims, **characterised in that** the first frame and the second frame are constituted by tubes.

5. Security device according to any one of the preceding claims, **characterised in that** the first frame (92) and the second frame (91) are originated from the same tubes.

6. Security device according to any one of the preceding claims, **characterised in that** it comprises several deformable main elements that are simultaneously or successively stressed when the retaining element is displaced.

7. Security device according to any one of the preceding claims, **characterised in that** the efforts applied by the device to the vehicle at the level of its anchoring points (14; 29; 86; 93) do not exceed the tear-off value during the whole programmed displacement of the retaining element.

8. Security device according to any one of the preceding claims, **characterised in that** the deformation of the deformable main element or elements determines the programmed displacement of the retaining element.

9. Security device according to any one of the preceding claims, **characterised in that** the deformable main element or elements are made of metal profiles, one or more profiles comprising several bent-off sections.

10. Security device according to any one of the preceding claims, **characterised in that** the mobile load retaining element or elements (22; 32; 42; 52; 62; 72; 82) are movable through a rotating motion around a transversal axle (23; 33; 43; 59; 63) of the vehicle essentially located at the level of the floor.

11. Security device according to any one of the preceding claims, **characterised in that** the mobile load retaining element or elements (52) comprise auxiliary deformable elements (57) for damping and energy absorption at the level of their surfaces in contact with the loaded goods.

12. Security device according to claim 11, **characterised in that** the auxiliary deformable elements (57) for damping and energy absorption comprise a hollow body made of an elastomeric material and filled with a cellular foam.

13. Security device according to any one of the preceding claims, **characterised in that** the load retaining elements comprise at least one profile that is rigid with respect to the deformable elements.

14. Security device according to any one of the preceding claims, **characterised in that** the main deformable elements comprise elastomeric elements (26; 34, 35; 44, 44'; 54; 83; 94) and/or bent-off profiles (13a, 13b, 13c; 24; 36; 53, 53'; 97, 97') and/or spring elements (64; 73) and/or pneumatic elements and/or hydraulic elements (64) and/or pyrotechnic devices.

15. Security device according to any one of the preceding claims, **characterised in that** the second frame (11; 21; 31; 41; 51; 61; 71; 81; 91) is fastened to the floor of the vehicle.

16. Security device according to claim 15, **characterised in that** the second frame (11; 21; 31; 41; 51; 61; 71; 81; 91) is fastened to the floor of the vehicle at the level of the rear safety belts anchoring points of the vehicle.

17. Security device according to claim 15, **characterised in that** the second frame (11; 21; 31; 41; 51; 61; 71; 81; 91) is fastened to the floor of the vehicle at the level of the rear seats anchoring points of the vehicle.

18. Security device according to any one of the preceding claims, **characterised in that** the programmed displacement of the retaining element will reach 10 to 20 cm.

19. Security device according to any one of the preceding claims, **characterised in that** the longitudinal sides of the second frame are placed against the floor of the vehicle or against its side walls.

20. Security device according to any one of the preceding claims, **characterised in that** it comprises anchoring means using the fastening devices usually provided for fastening the rear safety belts of the vehicle and/or the rear seats of the vehicle.

21. Security device (110) according to any one of claims 1 to 14, **characterised in that** it is anchored on a mobile floor (117) movable lengthwise with respect to the vehicle body (119), the vehicle floor being of programmed deformation and travel and comprising a deformable means (118) for connection to the vehicle body, allowing the dampening of the movement of the floor and the absorption of its kinetic energy.

22. Security device according to any one of claims 1 to 21, **characterised in that** the second frame is horizontal.

23. Vehicle (100), **characterised in that** it is equipped with a security device according to any one of the preceding claims.

## Patentansprüche

1. Sicherheitsvorrichtung (10; 20; 30; 40; 50; 60; 70; 80; 90) zum Festhalten einer Warenladung, die sich in einem Fahrzeug (100) bei einer Verzögerung des Fahrzeugs relativ zum Fahrzeug in Bewegung setzt, wobei die Vorrichtung auf einer programmierten Verformung und einer programmierten Verschiebung beruht und mindestens ein bewegliches Element (12; 22; 32; 42; 52; 62; 72; 82; 92), dessen Verschiebung die Verformung mindestens eines verformbaren Hauptelements (13a, 13b, 13c; 24, 26; 34, 35, 36; 44; 53, 53', 54; 64; 73; 83; 94, 97, 97') verursacht, zum Festhalten der Ladung aufweist, wodurch der Aufprall der Ladung auf das oder die beweglichen Halteelemente gedämpft und die kinetische Energie der Ladung (1) absorbiert wird, welche in Berührung mit dem oder den Halteelementen steht, **dadurch gekennzeichnet, dass** die Vorrichtung einen ersten praktisch senkrecht stehenden Rahmen (12; 22; 32; 42; 52; 62; 72; 82; 92) aufweist, der mit einem zweiten Rahmen (11; 21; 31; 41; 51; 61; 71; 81; 91) verbunden ist, der hinter dem ersten Rahmen an der Fahrzeugkarosserie verankert ist.

2. Sicherheitsvorrichtung nach Anspruch 1, **dadurch gekennzeichnet, dass** sie an einem Fahrzeugboden verankert ist.

3. Sicherheitsvorrichtung nach einem der vorstehenden Ansprüche, **dadurch gekennzeichnet, dass** der erste Rahmen (12; 92) starr am zweiten Rahmen (11; 91) befestigt ist.

4. Sicherheitsvorrichtung nach einem der vorstehenden Ansprüche, **dadurch gekennzeichnet, dass** der erste Rahmen und der zweite Rahmen jeweils aus Rohren besteht.

5. Sicherheitsvorrichtung gemäss dem vorstehenden Anspruch, **dadurch gekennzeichnet, dass** der erste Rahmen (92) und der zweite Rahmen (91) aus den gleichen Rohren hervorgegangen sind.

6. Sicherheitsvorrichtung nach einem der vorstehenden Ansprüche, **dadurch gekennzeichnet, dass** sie mehrere verformbare Hauptelemente aufweist, welche bei der Verschiebung des Halteelementes gleichzeitig oder nacheinander beansprucht werden.

7. Sicherheitsvorrichtung nach einem der vorstehenden Ansprüche, **dadurch gekennzeichnet, dass** die Beanspruchungen, welche die Vorrichtung an den Verankerungspunkten (14; 29; 86; 93) auf das Fahrzeug ausübt, während der gesamten programmierten Verschiebung des Halteelementes den Wert der Abreisskraft nicht übersteigen.

8. Sicherheitsvorrichtung nach einem der vorstehenden Ansprüche, **dadurch gekennzeichnet, dass** die programmierte Verschiebung des Halteelements durch die Verformung des oder der verformbaren Hauptelemente bestimmt wird.

9. Sicherheitsvorrichtung nach einem der vorstehenden Ansprüche, **dadurch gekennzeichnet, dass** das oder die deformierbaren Hauptelemente aus Metallprofilen hergestellt sind und eines oder mehrere Profile mehrere abgebogene Bereiche aufweisen.

10. Sicherheitsvorrichtung nach einem der vorstehenden Ansprüche, **dadurch gekennzeichnet, dass** das oder die beweglichen Halteelemente (22; 32; 42; 52; 62; 72; 82) für die Ladung gegenüber dem Fahrzeug eine Schwenkbewegung um eine Querachse (23; 33; 43; 59; 63) ausführen können, welche sich im wesentlichen in Höhe des Bodens befindet.

11. Sicherheitsvorrichtung nach einem der vorstehenden Ansprüche, **dadurch gekennzeichnet, dass** das oder die beweglichen Halteelemente (52) für die Ladung in Höhe ihrer Berührungsfläche mit der Ladung verformbare Hilfselemente (57) aufweisen, die zur Dämpfung und zur Energieabsorption dienen.

12. Sicherheitsvorrichtung nach Anspruch 11, **dadurch gekennzeichnet, dass** die verformbaren Hilfselemente (57) zur Dämpfung und zur Energieabsorption einen Hohlkörper aus einem elastomeren Material aufweisen, der mit einem aufgeschäumten Material mit Zellenstruktur gefüllt ist.

13. Sicherheitsvorrichtung nach einem der vorstehenden Ansprüche, **dadurch gekennzeichnet, dass** die Halteelemente mindestens ein Profilelement aufweisen, das im Bezug auf die verformbaren Elemente starr ist.

14. Sicherheitsvorrichtung nach einem der vorstehenden Ansprüche, **dadurch gekennzeichnet, dass** die verformbaren Hauptelemente elastomere Elemente (26; 34, 35; 44, 44'; 54; 83; 94) und/oder gebogene Profilstäbe (13a, 13b, 13c; 24; 36; 53, 53'; 97, 97') und/oder Federelemente (64; 73) und/oder pneumatische Elemente und/oder hydraulische Elemente (64) und/oder pyrotechnische Vorrichtungen aufweisen.

15. Sicherheitsvorrichtung nach einem der vorstehenden Ansprüche, **dadurch gekennzeichnet, dass** der zweite Rahmen (11; 21; 31; 41; 51; 61; 71; 81; 91) am Fahrzeugboden befestigt ist.

16. Sicherheitsvorrichtung nach Anspruch 15, **dadurch gekennzeichnet, dass** der zweite Rahmen (11; 21; 31; 41; 51; 61; 71; 81; 91) auf dem Fahrzeugboden in Höhe der Verankerungspunkte der hinteren Sicherheitsgurte des Fahrzeugs befestigt ist.

17. Sicherheitsvorrichtung nach Anspruch 15, **dadurch gekennzeichnet, dass** der zweite Rahmen (11; 21; 31; 41; 51; 61; 71; 81; 91) am Fahrzeugboden in Höhe der Verankerungspunkte der Hintersitze des Fahrzeugs befestigt ist.

18. Sicherheitsvorrichtung nach einem der vorstehenden Ansprüche, **dadurch gekennzeichnet, dass** die programmierte Verschiebung des Halteelementes den Wert von 10 bis 20 cm erreicht.

19. Sicherheitsvorrichtung nach einem der vorstehenden Ansprüche, **dadurch gekennzeichnet, dass** die Längsseiten des zweiten Rahmens am Fahrzeugboden oder an den Seitenwänden des Fahrzeugs anliegen.

20. Sicherheitsvorrichtung nach einem der vorstehenden Ansprüche, **dadurch gekennzeichnet, dass** sie Verankerungsmittel aufweist, welche die Befestigungen ausnutzen, die normalerweise zum Befestigen der hinteren Sicherheitsgurte des Fahrzeuges und/oder der Hintersitze des Fahrzeuges vorgesehen sind.

21. Sicherheitsvorrichtung (110) nach einem der Ansprüche 1 bis 14, **dadurch gekennzeichnet, dass** sie auf einem Boden (117) verankert ist, der gegenüber der Fahrzeugkarosserie (119) in Längsrichtung beweglich ist, wobei der Fahrzeugboden für eine programmierte Verformung und eine programmierte Verschiebung ausgebildet ist und ein zur Verbindung mit dem Fahrzeug bestimmtes verformbares Mittel (118) aufweist, welches die Dämpfung der Bewegungen des Bodens und die Absorption seiner kinetischen Energie ermöglicht.

22. Sicherheitsvorrichtung nach einem der Ansprüche 1 bis 21, **dadurch gekennzeichnet, dass** der zweite Rahmen horizontal liegt.

23. Fahrzeug (100), **dadurch gekennzeichnet, dass** es mit einer Sicherheitsvorrichtung gemäss einem der vorstehenden Ansprüche ausgerüstet ist.
